# EUROPÄISCHE PATENTSCHRIFT

(11) **EP 3 042 168 B1**
(45) Veröffentlichungstag und Bekanntmachung des Hinweises auf die Patenterteilung: **29.12.2021**
(21) Anmeldenummer: 14789982.7
(22) Anmeldetag: 05.09.2014
(51) Int. Cl.: G01J 3/02

(54) **OPTIKGRUNDKÖRPER FÜR SPEKTROMETER, VERFAHREN ZUR HERSTELLUNG EINES OPTIKGRUNDKÖRPERS FÜR SPEKTROMETER SOWIE SPEKTROMETER MIT EINEM SOLCHEN OPTIKGRUNDKÖRPER**
OPTICAL BASE BODY FOR SPECTROMETER, METHOD OF PRODUCING AN OPTICAL BASE BODY FOR A SPECTROMETER AND SPECTROMETER COMPRISING SUCH AN OPTICAL BASE BODY
CORPS DE BASE OPTIQUE POUR SPECTROMÈTRE, PROCÉDÉ DE RÉALISATION D'UN CORPS DE BASE OPTIQUE POUR SPECTROMÈTRE ET SPECTROMÈTRE COMPRENANT UN TEL CORPS DE BASE OPTIQUE

(30) Priorität: 05.09.2013 DE 102013109740; 10.09.2013 DE 102013109921
(43) Veröffentlichungstag der Anmeldung: 13.07.2016
(73) Patentinhaber: Bruker AXS GmbH, 76187 Karlsruhe (DE)
(72) Erfinder: SCHMIDT, Armin, 47574 Goch (DE); SIMONS, Jennifer, 47559 Kranenburg (DE); SIMONS, Rainer, 47559 Kranenburg (DE)
(74) Vertreter: CBDL Patentanwälte
(86) Internationale Anmeldenummer: PCT/DE2014/100324
(87) Internationale Veröffentlichungsnummer: WO 2015/032392

(56) Entgegenhaltungen:
- DE-A1-102011 082 468
- US-A1- 2003 227 628
- US-A1- 2005 023 484
- US-A1- 2012 251 763
- US-A1- 2013 062 510
- None

## Beschreibung

### TECHNISCHES GEBIET DER ERFINDUNG

Die Erfindung betrifft einen Optikgrundkörper für Spektrometer zur Halterung von weiteren Bauteilen eines Spektrometers. Die Erfindung betrifft ferner ein Verfahren zur Herstellung eines solchen Optikgrundkörpers und ein Spektrometer mit einem solchen Optikgrundkörper.

### HINTERGRUND DER ERFINDUNG

Bei Spektrometern stellen Temperaturschwankungen ein besonderes Problem dar, da bei diesen hochpräzisen Instrumenten bereits geringe Wärmeausdehnungen und dadurch bedingte Verschiebungen im Strahlengang zu Fehlern wie z.B. dem sogenannten Bildpositionsdriften und Defokussierungen führen können. Um solche Fehler aufgrund thermischer Einflüsse zu vermeiden, werden zwei grundsätzlich verschiedene Lösungsansätze verfolgt: Zum einen werden - wie z.B. in der DE 10 2010 000 490 A1 beschrieben - Kompensationsmechanismen eingebaut, die thermische Einflüsse kompensieren können. Solche Kompensationsmechanismen führen zu befriedigenden Ergebnissen, sind aber äußerst komplex. Zum anderen wird versucht, den Optikgrundkörper, an dem weitere Bauteile des jeweiligen Spektrometers wie z.B. Lichteintrittsoptiken, Spiegel, Beugungsgitter, Detektoren etc. befestigt werden, so aus Materialien mit niedrigem Wärmeausdehnungskoeffizienten herzustellen, dass er weitgehend unempfindlich gegen Temperaturschwankungen ist. Dazu beschreibt z.B. die DE 32 11 868 A1 einen Optikgrundkörper aus verdichteter Keramik, wobei der Grundkörper mittels entsprechender Gussformen gebildet wird.

Die WO 01 131 55 A1 lehrt verschiedene Materialien, wie Glaskeramik, faserverstärkten Kunststoff und Metalllegierungen zur Herstellung eines Abstandselementes für eine Haltevorrichtung von Komponenten von optischen Aufbauten.

Aus den Druckschriften DE 100 10 514 A1 und DE 10 2011 082 468 A1 sind mehrteilige Optikgrundkörper und Spektrometergehäuse bekannt, die entweder durch Umformen wie z.B. Tiefziehen bzw. durch Zusammensetzen von Einzelteilen insbesondere aus kohlenstofffaserverstärktem Kunststoff gebildet werden.

Die bekannten Optikgrundkörper, die auch als Komponententräger, Chassis, optische Bank, Gehäuse etc. bezeichnet werden, erfüllen ihre Zwecke, stellen aber immer Kompromisse zwischen Eigenschaften wie Genauigkeit, Herstellungsaufwand, Herstellungskosten, Bruchempfindlichkeit, Gewicht, Variabilität etc. dar, so dass in mehrerlei Hinsicht Verbesserungsbedarf besteht.

### OFFENBARUNG DER ERFINDUNG

Der Erfindung liegt die Aufgabe zugrunde, einen hinsichtlich seiner Temperaturstabilität, das heißt seiner Unempfindlichkeit gegenüber Temperaturschwankungen zumindest innerhalb eines im Betrieb eines Spektrometers üblichen Temperaturbereichs verbesserten Optikgrundkörper und ein Verfahren zu seiner Herstellung anzugeben.

Die Aufgabe wird gelöst von einem Optikgrundkörper mit den Merkmalen des Anspruchs 1 bzw. von einem Verfahren mit den Merkmalen des Anspruchs 10. Der nebengeordnete Anspruch 5 betrifft ein Spektrometer mit einem erfindungsgemäßen Optikgrundkörper. Die Unteransprüche betreffen vorteilhafte Ausgestaltungen und Weiterbildungen der Erfindung.

Die Erfindung beruht auf der Grundidee, den Optikgrundkörper in Schichtbauweise aus mehreren übereinander geschichteten und miteinander verbundenen, insbesondere verklebten flachen Elementen, die jeweils einen niedrigen und zumindest in einer Isotropieebene im Wesentlichen isotropen Wärmeausdehnungskoeffizienten besitzen, zu fertigen, wobei die flachen Elemente derart übereinander geschichtet und miteinander verbunden werden, dass ihre Isotropieebenen im Wesentlichen parallel zueinander verlaufen. Dadurch wird überraschenderweise gleich eine ganze Reihe von Vorteilen erzielt.

Es sei an dieser Stelle betont, dass der Begriff "Übereinanderschichten" stellvertretend gewählt wurde, weil bei den üblichen Montagetechniken die einzelnen Elemente nacheinander und aufeinander angeordnet werden, die Elemente natürlich aber auch nebeneinander geschichtet sein können, was ausdrücklich vom Schutzumfang eingeschlossen sein soll. Zudem können kompakte Spektrometer ohnehin in verschiedenen Positionen gehalten werden, so dass die Elemente je nach Blickwinkel des Betrachters in einer Ansicht über-, in einer anderen Ansicht nebeneinander liegen.

Bislang wurde versucht, bei Optikgrundkörpern Klebungen und mehrstückige Bauweisen zu vermeiden, da es hierbei zu Setzungen bzw. (bei thermischen Schwankungen) zu induzierten Spannungen kommen kann. Viele der bekannten Optikgrundkörper sind deshalb aus dem Vollen gearbeitet, was regelmäßig sehr aufwändig und mit einem hohen Werkzeugverschleiß verbunden ist. Zudem lassen sich damit nur begrenzt komplexe Strukturen schaffen. Erfindungsgemäß werden nun einzelne flache Elemente aus Platten aus einem Material mit niedrigem und zumindest in einer Isotropieebene isotropem Wärmeausdehnungskoeffizienten hergestellt, wobei einzelne Platten nicht nur einfacher zu bearbeiten sind als ein Vollkörper, aus dem der Optikgrundkörper herausgearbeitet werden muss, sondern wobei einzelne Platten auch leicht so bearbeitet werden können, dass sich benachbarte Platten zur Bildung komplexer Strahlengänge und/oder Halterungen für weitere Bauteile eines Spektrometers ergänzen.

Durch die Schichtbauweise wird es möglich, einen zur Bestückung mit Einzelkanaldetektoren geeigneten Optikgrundkörper mit komplexen Strahlengang- und Halterungsstrukturen zu schaffen, in dem Aufnahmen für Einzelkanaldetektoren so vorgesehen ist, dass die Einzelkanaldetektoren von unterschiedlichen Seiten in den Optikgrundkörper eingeführt werden können. Damit wird es möglich, die Lichtaufnahmeabschnitte zumindest bestimmter Einzelkanaldetektoren wesentlich dichter beieinander anzuordnen, als dies bei parallel zueinander von derselben Seite eingeführten Detektoren möglich wäre. Solche Detektoren besitzen nämlich üblicherweise einen dickeren Hauptkörper und einen dünneren Lichtaufnahmeabschnitt an einem Ende des Hauptkörpers, so dass bei parallel nebeneinander angeordneten Detektoren die Dicke der jeweiligen Hauptkörper einen minimalen Abstand der Lichtaufnahmeabschnitte der Detektoren definiert. Durch die erfindungsgemäße Anordnung können nun auch sehr dicht beieinanderliegende Spektrallinien mittels Einzelkanaldetektoren erfasst werden.

Die flachen Elemente werden aus einer oder mehreren Platten mittels eines Trennverfahrens, z.B. durch Sägen, Fräsen, Wasserstrahl- oder Laserschneiden, hergestellt, so dass in den Platten vorhandene Isotropieebenen, innerhalb derer der Wärmeausdehnungskoeffizient zumindest annähernd isotrop ist, erhalten bleibt, wogegen Umformungsverfahren, wie z.B. Tiefziehen, Isotropieeigenschaften regelmäßig verändert.

Unter einem Material mit niedrigem Wärmeausdehnungskoeffizienten werden hier Materialien mit Wärmeausdehnungskoeffizienten kleiner 5 x 10⁻⁶ K⁻¹, vorzugsweise kleiner 3 x 10⁻⁶ K⁻¹ verstanden. Verwendet werden kohlenfaserstoffverstärkte Kunststoffe (CFK) oder glasfaserverstärkte Kunststoffe (GFK).

Alle flachen Elemente eines Optikgrundkörpers bestehen aus einem einzigen Material mit bestimmten ausgezeichneten Richtungen, wie z.B. CFK. So werden die flachen Elemente derart übereinandergeschichtet und miteinander verbunden, dass diese Richtungen miteinander übereinstimmen, dass also bei aus CFK bestehenden Elementen die Faserverläufe benachbarter Elemente miteinander übereinstimmen. Platten aus GFK oder CFK besitzen nämlich meist Anisotropien, insbesondere in Richtung der Plattendickenachse. Erfindungsgemäß bleiben durch Ausrichtung der flachen Elemente alle Symmetrieebenen in Ausrichtung, während eventuelle Anisotropien sich lediglich in Dickenrichtung des Optikgrundkörpers auswirken, was ohne Einfluss auf die optischen Eigenschaften des Optikgrundkörpers ist. Mit anderen Worten: zum Aufbau eines einfachen hohlen Grundkörpers wie z.B. eines Quaders mit einem Boden, einem Deckel und vier Seitenwänden werden nicht etwa alle Teile aus einer Platte ausgeschnitten und dann die Seitenwände aufgestellt, also um 90° gegenüber Boden und Deckel gekippt, sondern erfindungsgemäß werden Seitenwände z.B. bei kleineren Spektrometern dadurch geschaffen, dass aus einer einzigen entsprechend dicken Platte oder aus mehreren dünnen Platten so viel Material entfernt wird, dass nur ein Rahmen stehenbleibt, der die Seitenwände oder zumindest Teil einer Seitenwand bildet. Bei größeren Spektrometern werden Seitenwände entsprechend durch Übereinanderschichten von in der beschriebenen Weise gebildeten Rahmenteilen aufgebaut.

Weitere Einzelheiten und Vorteile der Erfindung ergeben sich aus der nachfolgenden rein beispielhaften und nicht-beschränkenden Beschreibung von Ausführungsbeispielen der Erfindung in Verbindung mit der Zeichnung.

### KURZE BESCHREIBUNG DER ZEICHNUNG

- Fig. 1: zeigt die wesentlichen Teile eines kompakten Spektrometers für mobile Anwendungen mit einem erfindungsgemäßen Optikgrundkörper in perspektivischer Darstellung.
- Fig. 2a: zeigt das Spektrometer gemäß Fig. 1 in perspektivischer Explosionsdarstellung.
- Fig. 2b: zeigt eine Vergrößerung eines Ausschnittes aus Fig. 2a.
- Fig. 3: zeigt einen Teil eines Spektrometers mit Einzelkanaldetektoren und erfindungsgemäßem Optikgrundkörper in perspektivischer Darstellung.
- Fig. 4: zeigt einen Teil eines Spektrometers gemäß Fig. 3 in perspektivischer Explosionsdarstellung gesehen in Richtung auf die Strahleneingänge zu den Einzelkanaldetektoren.
- Fig. 5: zeigt einen Teil eines Spektrometers gemäß Fig. 3 in perspektivischer Explosionsdarstellung gesehen auf die den Strahleneingängen abgewandte Rückseite des Optikgrundkörpers.

### BESCHREIBUNG BEVORZUGTER AUSFÜHRUNGSFORMEN

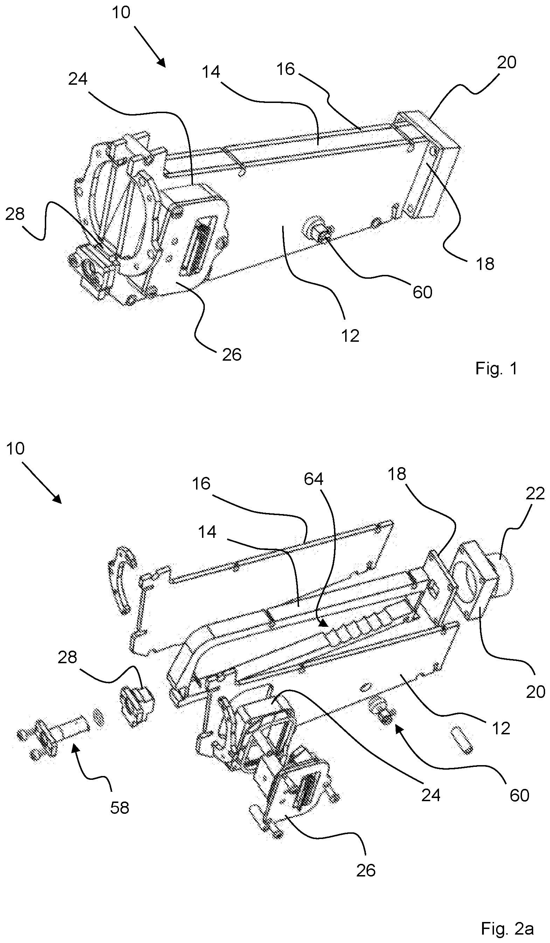

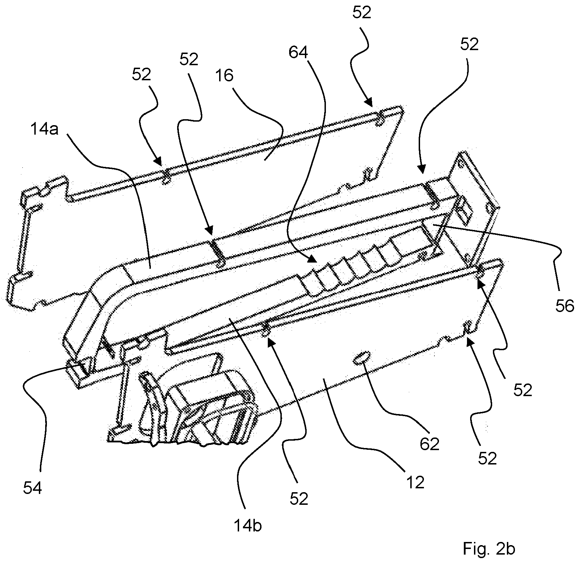

In den Figuren 1 und 2a ist ein in seiner Gesamtheit mit 10 bezeichnetes Spektrometer mit seinen Grundkomponenten gezeigt. Das Spektrometer umfasst einen Optikgrundkörper, der in Schichtbauweise aus übereinander geschichteten und miteinander verklebten flachen Elementen, nämlich bei diesem Ausführungsbeispiel den drei flachen Elementen 12, 14 und 16 besteht. An dem Optikgrundkörper sind verschiedene Baugruppen befestigt, insbesondere eine Halterung 18 zur Befestigung eines Gitterträgers 20 für ein Beugungsgitter 22, eine Halterung 24 für einen Detektorträger 26 mit einem hier als Halbleiter-Detektor ausgeführten Detektor und ein Optikträger 28 zur Befestigung einer Lichteintrittsoptik 58, die einen Eintrittsspalt für in dem Spektrometer zu analysierendes Licht bildet. In dem flachen Element 12 ist, wie in Fig. 2b gut zu erkennen, eine Öffnung 62 vorgesehen, in der ein Anschlussstück 60 montiert wird, über das das Spektrometer im Betrieb z.B. mit Argon gespült werden kann.

Das hier gezeigte Spektrometer 10 ist als kompaktes, mobiles Spektrometer ausgestaltet. Die einzelnen flachen Elemente 12, 14 und 16 des Optikgrundkörpers sind bei diesem Ausführungsbeispiel aus CFK-Platten ausgeschnitten, insbesondere mittels Wasserstrahlschneiden. Dabei sind die beiden äußeren Elemente 12 und 16 aus einer einzigen bzw. - je nach Größe der verwendeten Platten - zwei separaten Platten mit einer Dicke von 3 mm ausgeschnitten, während das zwischen den beiden äußeren Elementen 12 und 16 sandwichartig eingeschlossene mittlere Element 14 aus einer Platte mit einer Dicke von 10 mm ausgeschnitten ist. Bei den Größenangaben handelt es sich um typische Bemaßungen. Generell besitzen die erfindungsgemäß verwendeten flachen Elemente Dicken im Bereich von etwa 1 mm bis etwa 15 mm. Die flachen Elemente werden durch reine Trennverfahren, wie insbesondere Wasserstrahlschneiden, aus entsprechenden Platten hergestellt, ohne die Platten umzuformen, also z.B. zu biegen oder tiefzuziehen, da durch diese Trennverfahren die Isotropieeigenschaften der Platten nicht verändert werden.

Die Platten weisen bestimmte ausgezeichnete Richtungen auf, wie z.B. CFK- und GFK-Platten durch die jeweiligen Faserlagen der in ihnen vorgesehenen Fasern. Dabei werden die flachen Elemente bzw. die Platten beim Zuschneiden der flachen Elemente so ausgerichtet, dass die Vorzugsrichtungen in den einzelnen flachen Elementen im fertigen Optikgrundkörper miteinander ausgerichtet sind.

Erfindungsgemäß verwendete Platten besitzen zumindest eine Isotropieebene, innerhalb derer der Wärmeausdehnungskoeffizient im Wesentlichen isotrop ist. Die Isotropieebene verläuft im Normalfall parallel zu den flachen Außenseiten der Platten. Anisotropien in Dickenrichtung beeinträchtigen dann die optischen Eigenschaften des fertigen Optikgrundkörpers nicht.

Der Optikgrundkörper bildet bei dem gezeigten Ausführungsbeispiel gleichzeitig das Spektrometergehäuse. Weitere Gehäuse zur Abschottung des Spektrometers können entfallen, da es leicht möglich ist, die flachen Elemente so auszugestalten, dass sie die gewünschte Doppelfunktion von Optikträger und Behältnis erfüllen. Beim Aufbau des Optikgrundkörpers ist eine hochgenaue Bearbeitung der einzelnen Platten oder die Herstellung von Passungen oder Positionsanschlägen nicht notwendig, da z.B. Montageschablonen, insbesondere Klebeschablonen, verwendet werden können, um die einzelnen flachen Elemente gegeneinander auszurichten. Bei der hier gezeigten besonders bevorzugten Ausführungsform kann sogar auf Klebeschablonen verzichtet werden, da die flachen Elemente über Positionierachsen wie nachfolgend beschrieben ausgerichtet werden.

Die Figuren 2a und 2b zeigen den Zustand wesentlicher Komponenten des Spektrometers vor dem endgültigen Zusammenbau. Insbesondere ist das einteilig gefertigte flache Element 14 im gezeigten Zustand tatsächlich noch ein einziges Bauteil, das auch Mittelplatte genannt wird, und das dann zusammen mit den beiden flachen Elementen 12 und 16, die auch als Seitenplatten bezeichnet werden, einen Hohlraum definieren kann. Zum Aufbau des Optikgrundkörpers wird vorteilhaft so vorgegangen, dass das mittlere Element 14 nach dem Ausschneiden aus einer entsprechenden Materialplatte zunächst einen einteiligen umlaufenden Rahmen bildet, der mit einem der beiden seitlichen Elemente, z.B. dem Element 12, ausgerichtet und verklebt wird. Erst nach dem Verkleben werden in dem Element 14 Ausnehmungen für die Lichteintrittsoptik und ein Durchlass für Strahlen zum/vom Gitter 22 gebildet, insbesondere durch Ausschneiden. Die Ausnehmungen können sich auch über die gesamte Dicke des Elements 14 erstrecken, so dass dieses in zwei Teile 14a und 14b (siehe Fig. 2b) separiert wird, die jedoch beide an dem Element 12 befestigt sind und daher in der gewünschten Ausrichtung zueinander verbleiben.

Bei der derzeit bevorzugten Ausführungsform werden nach dem Verkleben der Mittelplatte mit einer der Seitenplatten die in Fig. 2b gezeigten Stege 54 und 56 vollständig entfernt. Die Stege 54 und 56 stellen vorteilhaft sicher, dass die Teile 14a und 14b der Mittelplatte stets korrekt zueinander orientiert bleiben und beim Zusammenbau des Optikgrundkörpers keine Klebeschablone benötigt wird, wie dies nötig wäre, wenn die Teile 14a und 14b vor dem Verkleben mit einer der Seitenplatten voneinander gelöst oder sogar direkt separat gefertigt worden wären. Insbesondere bleibt auf diese Weise auch die platten inhärente Isotropie der Wärmeausdehnung in den sich nach Entfernung der Stege 54 und 56 ergebenden Teilen 14a und 14b erhalten.

Zur Montage des Optikgrundkörpers unter Verzicht auf eine Klebeschablone dienen die Ausrichtöffnungen 52 in den flachen Elementen 12, 14 und 16, wobei von diesen Öffnungen aus Gründen der Übersichtlichkeit nur einige in Fig. 2b mit Bezugszeichen versehen wurden. Durch diese Ausrichtöffnungen können bei der Montage entsprechende, zu den Ausrichtöffnungen zumindest partiell komplementäre, üblicherweise stangenförmige Ausrichtelemente, auch Positionierachsen genannt, geführt werden, um die Bauteile des Optikgrundkörpers miteinander auszurichten. Sind dann die Mittel- und Seitenteile des Optikgrundkörpers miteinander verklebt, kann das System vorteilhaft dadurch ausgerichtet werden, dass zunächst die Orientierung der Beugungsgitterfurchen rotatorisch eingestellt und anschließend die Detektorbaugruppe bewegt und verklebt wird. Diese Vorgehensweis erlaubt eine exakte Feinjustage der Spektrometeroptik zur Erzielung der gewünschten spektralen Auflösung.

Je nach Ausgestaltung des Spektrometers können auf und in den seitlichen Elementen 12 und 16 weitere Elemente, wie z.B. Blenden, so befestigt, insbesondere geklebt werden, dass diese dann im fertigen Montagezustand in den durch die seitlichen Elemente und das mittlere Element definierten Hohlraum ragen. Dazu können die Elemente 12 und 16 mit entsprechenden Ausnehmungen versehen werden.

Ein besonderer Vorteil der Schichtbauweise ist, dass das mittlere Element 14 beim Ausschneiden aus einer Platte direkt mit bestimmten im bestimmungsgemäßen Montagezustand zum Inneren des Spektrometers gewandten Formen versehen werden kann, die Lichtleitstrukturen und Streulichtfallen bilden. So bildet z.B. die in den Fig. 2a und 2b gezeigte gezahnte Struktur 64 des flachen Elementes 14 eine Streulichtfalle für die nullte Beugungsordnung.

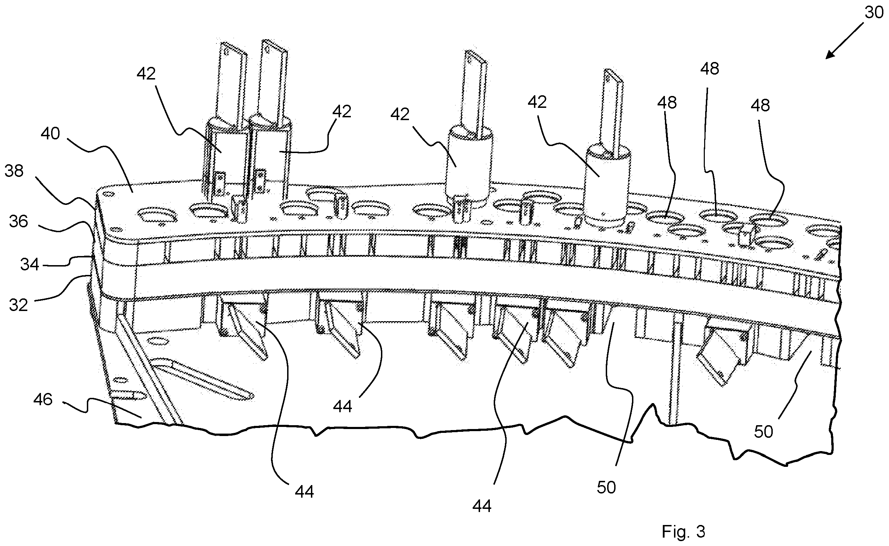

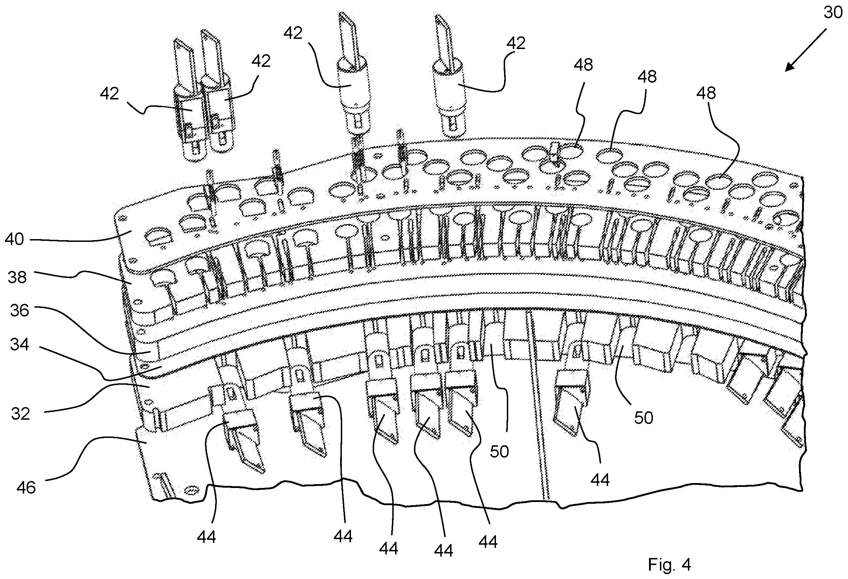

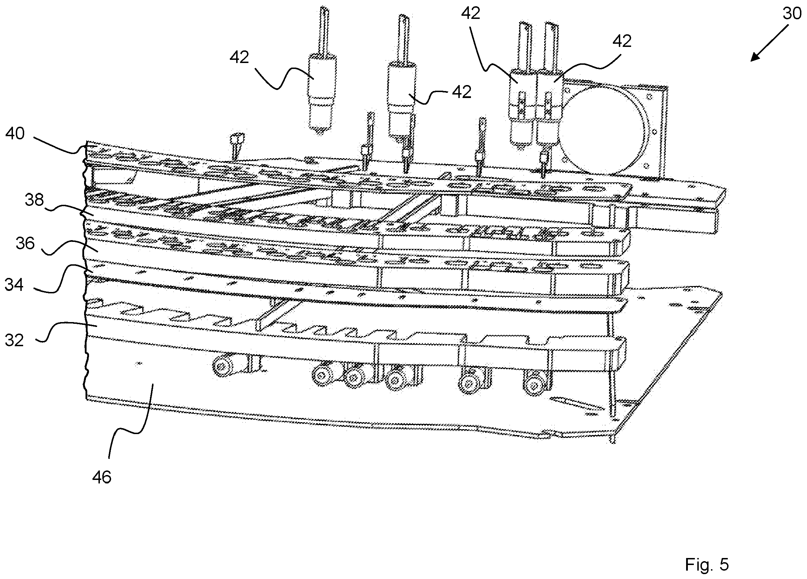

In den Figuren 3 bis 5 ist jeweils ein Abschnitt eines in seiner Gesamtheit mit 30 bezeichneten Spektrometers gezeigt, bei dem es sich um ein Spektrometer mit Einzelkanaldetektoren zur stationären Anwendung handelt und bei dem in einem Optikgrundkörper, der erfindungsgemäß durch Schichten und Verbinden mehrerer flacher Elemente 32, 34, 36, 38 und 40 übereinander aufgebaut ist, Aufnahmen für Einzelkanaldetektoren 42 und 44, von denen hier nur einige gezeigt sind, gebildet sind. Spektrometer mit Einzelkanaldetektoren zeichnen sich durch eine im Vergleich zu Spektrometern mit Zeilendetektoren noch höhere Präzision aus.

Einzelkanaldetektoren besitzen üblicherweise eine röhrenförmige Gestalt mit einem dickeren Hauptkörper und einem dünneren Lichtaufnahmeabschnitt an einem Ende des Hauptkörpers, so dass bei parallel nebeneinander angeordneten Detektoren die Dicke der jeweiligen Hauptkörper einen minimalen Abstand der Lichtaufnahmeabschnitte der Detektoren definiert. Durch die nachfolgend beschriebene erfindungsgemäße Anordnung der Detektoren können auch sehr dicht beieinanderliegende Spektrallinien mittels Einzelkanaldetektoren erfasst werden, da dabei der Abstand der Lichtaufnahmeabschnitte benachbarter Detektoren nicht durch die Dicke von deren Hauptkörpern begrenzt ist.

Der Optikgrundkörper ist auf einer Basisplatte 46 befestigt, die bei diesem Ausführungsbeispiel aus dem gleichen Material wie die flachen Elemente 32 bis 40 besteht und die ebenfalls eine Isotropieebene, innerhalb derer der Wärmeausdehnungskoeffizient im Wesentlichen isotrop ist, besitzt, wobei die Isotropieebenen der flachen Elemente 32 bis 40 und der Basisplatte 46 parallel zueinander ausgerichtet sind.

Die flachen Elemente 32 bis 40 und die Basisplatte 46 sind durch Trennverfahren ohne Umformung aus entsprechend dimensionierten Platten hergestellt, so dass entsprechende Isotropieeigenschaften der Platten nicht durch Umformung gestört werden. Dabei sei an dieser Stelle betont, dass es natürlich möglich ist, an den flachen Elementen, und zwar auch an den in den Fig. 1, 2a und 2b gezeigten flachen Elemente, bestimmte umgeformte Bereiche vorzusehen, z.B. Randbereiche, die keine Funktion im Hinblick auf die optischen Eigenschaften des Spektrometers besitzen und von daher nicht Teil des eigentlichen Optikgrundkörpers bilden. Unter dem Begriff "flache Elemente" werden also nur diejenigen Abschnitte des Optikgrundkörpers verstanden, die die optischen Eigenschaften des Spektrometers bestimmen und deren Isotropieebenen zueinander im Wesentlichen parallel sind.

Typischerweise besitzen die flachen Element 32 und 36 eine Dicke im Bereich von etwa 9 bis 15 mm, vorzugsweise etwa 12 mm, die flachen Elemente 34 und 40 eine Dicke von etwa 1 bis 5 mm, vorzugsweise etwa 3 mm und das flache Element 38 sowie die Basisplatte 46 eine Dicke im Bereich von etwa 6 bis 10 mm, vorzugsweise etwa 8 mm. Bei den Größenangaben handelt es sich um typische Bemaßungen. Generell besitzen die erfindungsgemäß verwendeten flachen Elemente Dicken im Bereich von etwa 1 mm bis etwa 15 mm.

In den einzelnen flachen Elementen 32 bis 40 des Optikgrundkörpers sind unterschiedliche Ausnehmungen vorgesehen, die einander teilweise zur Bildung von Strahlengängen und Aufnahmen für weitere Bauelemente des Spektrometers, insbesondere für Spiegel und Einzelkanaldetektoren, ergänzen. Beispielsweise sind in dem flachen Element 40 Ausnehmungen 48 und in dem flachen Element 32 Ausnehmungen 50, von denen jeweils nur einige mit Bezugszeichen versehen wurden, zum Einführen von Detektoren 42, 44 vorgesehen. Entsprechende Ausnehmungen und zusätzliche Lichteintrittskanäle befinden sich in den jeweils benachbarten flachen Elementen. Für den Fachmann ist aus dieser Darstellung ersichtlich, dass es die Erfindung vorteilhaft erlaubt, auch komplexe Strahlengänge und Aufnahmen in einfacher Weise dadurch zu bilden, dass entsprechende Abschnitte der Strahlengänge bzw. der Aufnahmen in einzelnen flachen Elementen gebildet werden, die sich dann mit Ausnehmungen in benachbarten flachen Elementen zu der gewünschten komplexen Struktur ergänzen, insbesondere zu einem zur Bestückung mit Einzelkanalsensoren geeigneten Optikgrundkörper, in dem Aufnahmen für Einzelkanaldetektoren vorgesehen sind, die von unterschiedlichen Seiten, im gezeigten Beispiel von oben und von der Seite, in den Optikgrundkörper eingesetzt werden können, so dass die Lichtaufnahmeabschnitte zumindest bestimmter Einzelkanaldetektoren wesentlich dichter beieinander angeordnet werden können, als dies bei parallel zueinander von derselben Seite eingeführten Detektoren möglich wäre. Dies führt auch dazu, dass das Spektrometer kompakter bauen kann, denn benachbarte Spektrallinien müssen nun weniger weit aufgefächert werden, um zu den Lichtaufnahmeabschnitte der zur Detektion der jeweiligen Spektrallinien bestimmten Detektoren zu gelangen.

Durch Ausgestaltung der jeweiligen Strahlengänge, insbesondere durch Anordnung von Spiegeln kann Licht in einfacher Weise so gelenkt werden, dass es auf die Lichtaufnahmeabschnitte der jeweiligen Detektoren fällt.

Bei der in den Figuren 3 bis 5 gezeigten bevorzugten Ausführungsform ist der Optikgrundkörper mit einer Vielzahl von Ausnehmungen 48, 50 für Einzelkanaldetektoren versehen, von denen dann im späteren Betrieb des Spektrometers üblicherweise nur einige mit Detektoren bestückt werden. Es handelt sich bei dem gezeigten Optikgrundkörper um einen "Universalgrundkörper", bei dem Aufnahmen für Detektoren an denjenigen Stellen vorgesehen sind, an denen typischerweise von Kunden analysierte Stoffe Spektrallinien zeigen. Im jeweiligen Einsatzfall interessieren den Kunden typischerweise nur wenige, z.B. 5 oder 10 Spektrallinien, der Optikgrundkörper könnte aber z.B. 30 oder 50 Einzelkanaldetektoren zur Detektion einzelner Spektrallinien aufnehmen. Der Kunde kann dann vorteilhaft angeben, welche bestimmten Spektrallinien für seinen Anwendungsfall von Interesse sind und mit dem Spektrometer ggf. detektiert werden sollen, so dass der Optikgrundkörper nur entsprechend mit Einzelkanaldetektoren bestückt werden muss, was mehrere Vorteile hat. So muss das Spektrometer nicht mehr Detektoren aufweisen, als im jeweiligen Anwendungsfall nötig. Der Hersteller muss nicht mehr, wie bislang üblich, kunden- bzw. anwendungsfallspezifische Optikgrundkörper fertigen, sondern kann mit einem Universalgrundkörper verschiedene Wünsche abdecken. Wenn sich kundenseitig die Wünsche ändern, muss ein vom Kunden angeschafftes Spektrometer nicht ersetzt, sondern lediglich die Detektorkonfiguration geändert werden, d.h. bestimmte Detektoren müssen in andere Aufnahmen eingesetzt werden.

Bei der in den Figuren 3 bis 5 gezeigten Ausführungsform sind die Aufnahmen so ausgebildet, dass die Detektoren von zwei um 90° zueinander versetzten Seiten aus in den Optikgrundkörper eingesetzt werden können. Es kann jedoch auch vorgesehen sein, dass die Detektoren von mehr als zwei Seiten aus eingesetzt werden, wobei diese Seiten nicht um 90° zueinander versetzt sein müssen.

Bei der gezeigten Ausführungsform sind die verwendeten Einzelkanaldetektoren gleicher Bauart, wobei in dem Optikgrundkörper Strahlengänge und/oder Spiegel so angeordnet sind, dass Lichtstrahlen auf die Lichtaufnahmeabschnitte der Detektoren unabhängig davon fallen können, von welcher Seite aus die Detektoren in den Optikgrundkörper eingesetzt sind. Damit kann vorteilhaft ein einziger Detektortyp, also z.B. ein Typ, bei dem Licht quer zur Längsrichtung des Detektors eingestrahlt wird, verwendet werden, was Kostenvorteile bei der Beschaffung (größere Stückzahlen eines Typs statt kleinere Stückzahlen verschiedener Typen) und Reparatur (es müssen nicht unterschiedliche Typen von Einzelkanaldetektoren vorgehalten werden) hat.

### BEZUGSZEICHENLISTE

- 10: Spektrometer
- 12: flaches Element
- 14: flaches Element
- 16: flaches Element
- 18: Halterung
- 20: Gitterträger
- 22: Beugungsgitter
- 24: Halterung
- 26: Detektorträger
- 28: Optikträger
- 30: Spektrometer
- 32: flaches Element
- 34: flaches Element
- 36: flaches Element
- 38: flaches Element
- 40: flaches Element
- 42: Detektor
- 44: Detektor
- 46: Basisplatte
- 48: Ausnehmung
- 50: Ausnehmung
- 52: Ausrichtöffnung
- 54: Steg
- 56: Steg
- 58: Lichteintrittsoptik
- 60: Anschlussstück
- 62: Öffnung
- 64: Streulichtfalle

## Patentansprüche

1. Optikgrundkörper für Spektrometer (30) zur Halterung von Bauteilen (18 - 30) eines Spektrometers, der in Schichtbauweise aus wenigstens drei übereinander geschichteten und miteinander verbundenen, insbesondere verklebten flachen aus Materialplatten mittels Trennverfahren gefertigten Elementen (12, 14, 16) gefertigt ist,
- wobei in wenigstens einem der flachen Elemente (14) eine Ausnehmung zur Bildung eines Hohlraums zwischen wenigstens zwei anderen flachen Elementen (12, 16) vorgesehen ist, so dass die flachen Elemente im fertigen Montagezustand ein Spektrometergehäuse bilden,
- wobei in mehreren flachen Elementen mittels Trennverfahren gebildete Ausnehmungen vorgesehen und so ausgebildet sind, dass sich zumindest bestimmte Ausnehmungen in benachbarten flachen Elementen zur Bildung von Strahlengängen und von Aufnahmen für weitere Bauelemente von Spektrometern ergänzen, und
- wobei die flachen Elemente aus kohlenstofffaserverstärkten (CFK-)Platten oder glasfaserverstärkten (GFK-)Platten einer einzigen Sorte gefertigt sind,
**dadurch gekennzeichnet, dass**
- die flachen Elemente (12, 14, 16) entsprechend in ihnen eingebrachten Ausrichtöffnungen (52) im Optikgrundkörper so ausgerichtet sind, dass ihre Faserverläufe miteinander übereinstimmen und die Ausrichtöffnungen (52) so eingebracht sind, dass die flachen Elemente durch Einführen von Ausrichtelementen, die zu den Ausrichtöffnungen zumindest partiell komplementär sind, zueinander ausgerichtet werden können, so dass sie Anisotropien des Wärmeausdehnungskoeffizienten in Richtung der Plattendickenachse besitzen können.

2. Optikgrundkörper nach Anspruch 1, **dadurch gekennzeichnet, dass** die Ausnehmung Lichtleitstrukturen, insbesondere Streulichtfallen (64) umfasst.

3. Optikgrundkörper nach Anspruch 1 oder 2, **dadurch gekennzeichnet, dass** die flachen Elemente (12, 14, 16) jeweils eine Dicke im Bereich von etwa 1 mm bis etwa 15 mm besitzen.

4. Optikgrundkörper nach einem der Ansprüche 1 bis 3, **dadurch gekennzeichnet, dass** in dem Optikgrundkörper Strahlengänge und/oder Spiegel angeordnet sind, wobei in dem Optikgrundkörper Aufnahmen zum Einsetzen von Einzelkanaldetektoren gleicher Bauart von unterschiedlichen Seiten aus in den Optikgrundkörper derart vorgesehen sind, dass Lichtstrahlen auf die Lichtaufnahmeabschnitte der Detektoren unabhängig davon fallen können, von welcher Seite aus die Detektoren in den Optikgrundkörper eingesetzt sind.

5. Spektrometer, umfassend einen Optikgrundkörper nach einem der Ansprüche 1 bis 3, an dem die Bauteile des Spektrometers gehaltert sind.

6. Spektrometer nach Anspruch 5, umfassend einen Optikgrundkörper nach Anspruch 4.

7. Spektrometer nach Anspruch 6 mit Einzelkanaldetektoren, wobei jeder Einzelkanaldetektor einen Lichtaufnahmeabschnitt besitzt, **dadurch gekennzeichnet, dass** zumindest bestimmte benachbarte Aufnahmen in dem Optikgrundkörper so ausgebildet sind, dass die Lichtaufnahmeabschnitte von in sie eingesetzten benachbarten Detektoren im bestimmungsgemäßen Montagezustand dichter beieinander liegen als es bei Anordnung derselben Detektoren parallel nebeneinander möglich wäre.

8. Spektrometer nach einem der Ansprüche 6 oder 7, **dadurch gekennzeichnet, dass** die Aufnahmen so ausgebildet sind, dass die Detektoren von zwei bis vier jeweils um 90° zueinander versetzten Seiten aus in den Optikgrundkörper eingesetzt werden können.

9. Spektrometer nach einem der Ansprüche 6 bis 7, **dadurch gekennzeichnet, dass** die Aufnahmen zur Bestückung mit Einzelkanaldetektoren und Strahlengänge durch in übereinandergeschichteten flachen Elementen mittels Trennverfahren gebildete Ausnehmungen gebildet sind.

10. Verfahren zur Herstellung eines Optikgrundkörpers für Spektrometer zur Halterung von Bauteilen eines Spektrometers, umfassend die folgenden Schritte:
- Bereitstellen einer oder mehrerer Platte/Platten aus kohlenstofffaserverstärktem Kunststoff (CFK) oder glasfaserverstärktem Kunststoff (GFK) einer einzigen Sorte,
- Herstellen flacher Elemente aus der oder den Platte/Platten mittels eines Trennverfahrens unter Beibehaltung der Isotropieebene der Platte/Platten in den flachen Elementen, wobei in wenigstens eines der flachen Elemente (14) mittels eines Trennverfahrens eine Ausnehmung eingebracht wird, die mittels zweier anderer flacher Elemente (12, 16) zur Bildung eines Hohlraums zwischen den flachen Elementen abgedeckt wird, wobei in mehrere flache Elemente mittels eines Trennverfahrens Ausnehmungen derart eingebracht werden, dass sich beim Übereinanderschichten und Verbinden der flachen Elemente zumindest bestimmte Ausnehmungen in benachbarten flachen Elementen zur Bildung von Strahlengängen und zur Halterung von weiteren Bauelementen von Spektrometern ergänzen und in benachbart aufeinanderzuschichtende flache Elemente einander entsprechende Ausrichtöffnungen (52) vor dem Verbinden der flachen Elemente miteinander derart eingebracht werden, dass die flachen Elemente durch Einführen von Ausrichtelementen, die zu den Ausrichtöffnungen zumindest partiell komplementär sind, zueinander ausgerichtet werden können,
- Aufbauen des Optikgrundkörpers durch Übereinanderschichten mit Hilfe der Ausrichtelemente und Verbinden, insbesondere Verkleben der flachen Elemente miteinander derart, dass ihre Faserverläufe miteinander übereinstimmen, so dass sie Anisotropien des Wärmeausdehnungskoeffizienten in Richtung der Plattendickenachse besitzen können.

## Claims

1. An optical base body for a spectrometer (30) for mounting components (18-30) of a spectrometer produced as a sandwich construction from at least three flat elements (12, 14, 16) produced from material plates by means of separation methods, layered on top of each other and interconnected, in particular bonded,
- wherein in at least one of the flat elements (14) an opening is provided for the formation of a cavity between at least two other flat elements (12, 16) so that the flat elements in the finished installed state form a spectrometer housing,
- wherein in several flat elements openings are provided and are constructed so that at least particular openings in adjacent flat elements complement each other for the formation of paths of rays and of mounts for further structural elements of spectrometers, and
- wherein the flat elements are produced from carbon-fibre-reinforced (CFP) or glass-fibre-reinforced (GFP) plates of a single type,
**characterized in that**
- the flat elements (12, 14, 16) are aligned in accordance with alignment openings (52) introduced into them in the optical base body so that their fibre courses coincide with one another, and the alignment openings (52) are introduced such that the flat elements can be aligned to one another by introducing alignment elements which are at least partially complementary to the alignment openings so that they may have anisotropies of the coefficient of thermal expansion in the direction of the plate thickness axis.

2. The optical base body according to claim 1, **characterized in that** the opening comprises light conducting structures, in particular scattered light traps (64).

3. The optical base body according to claim 1 or 2, **characterized in that** the flat elements (12, 14, 16) respectively have a thickness in the range of approximately 1 mm to approximately 15 mm.

4. The optical base body according to one of claims 1 to 3, **characterized in that** in the optical base body paths of rays and/or mirrors are arranged, with mounts being provided in the optical base body for inserting individual channel detectors of the same type of construction from different sides into the optical base body so that light rays can fall onto the light receiving sections of the detectors irrespective of the side from which the detectors are inserted into the optical base body

5. A spectrometer comprising an optical base body according to one of claims 1 to 3 on which the components of the spectrometer are mounted.

6. The spectrometer according to claim 5 comprising an optical base body according to claim 4.

7. The spectrometer according to claim 6 with individual channel detectors, wherein each individual channel detector has a light receiving section, **characterized in that** at least particular adjacent mounts are constructed in the optical base body so that the light receiving sections of adjacent detectors inserted into them lie closer to one another in the intended installed state than would be possible with the arrangement of the same detectors adjacent to one another in a parallel manner.

8. The spectrometer according to one of claims 6 or 7, **characterized in that** the mounts are constructed so that the detectors can be inserted into the optical base body from two to four sides, offset to one another respectively by 90°.

9. The spectrometer according to one of claims 6 to 7, **characterized in that** the mounts for mounting individual channel detectors and paths of rays are formed through openings formed in flat elements, layered on top of each other, by means of separation methods.

10. A method for producing an optical base body for a spectrometer for mounting components of a spectrometer, comprising the following steps:
- providing one or more plate/plates consisting of carbon-fibre-reinforced plastic (CFP) or glass-fibre-reinforced plastic (GFP) of a single type,
- producing flat elements from the plate/plates by means of a separation method, maintaining the isotropic plane of the plate/plates in the flat elements, wherein an opening is introduced into at least one of the flat elements (14) by means of a separation method, which opening is covered by means of two other flat elements (12, 16) for the formation of a cavity between the flat elements, wherein openings are introduced into several flat elements by means of a separation method, such that in the layering on top of each other and connecting of the flat elements at least particular openings in adjacent flat elements complement each other for the formation of paths of rays and for mounting other components of spectrometers, and alignment openings (52), corresponding to one another, are introduced into flat elements which are to be layered on top of each other in an adjacent manner, before the connecting of the flat elements with one another, such that the flat elements can be aligned to one another by introducing alignment elements which are at least partially complementary to the alignment openings,
- building up the optical base body by layering on top of each other with the use of the alignment elements and connecting, in particular bonding, the flat elements with one another such that their fibre courses coincide with one another so that they may have anisotropies of the coefficient of thermal expansion in the direction of the plate thickness axis.

## Revendications

1. Corps de base optique pour spectromètre (30), qui est destiné à supporter des composants (18 - 30) d'un spectromètre et qui est fabriqué en construction stratifiée à partir d'au moins trois éléments (12, 14, 16) plats superposés et reliés entre eux, en particulier collés, et réalisés à partir de plaques de matériau au moyen d'un procédé de séparation,
- dans lequel un évidement pour former une cavité entre au moins deux autres éléments (12, 16) plats est prévu dans l'un au moins des éléments (14) plats de sorte que les éléments plats forment un boîtier de spectromètre à l'état fini de montage,
- dans lequel des évidements formés au moyen d'un procédé de séparation sont prévus dans plusieurs éléments plats et sont conçus de telle sorte qu'au moins certains évidements dans des éléments plats adjacents se complètent pour former des trajets de rayons et des logements pour d'autres composants de spectromètres, et
- dans lequel les éléments plats sont fabriqués à partir de plaques renforcées de fibres de carbone (PRFC) ou de plaques renforcées de fibres de verre (PRFV) d'un seul type,
**caractérisé en ce que**
- les éléments plats (12, 14, 16) sont alignés dans le corps de base optique en fonction d'ouvertures d'alignement (52) ménagées dans ceux-ci, de telle sorte que leurs tracés de fibres coïncident entre eux et que les ouvertures d'alignement (52) sont ménagées de telle sorte que les éléments plats peuvent être alignés les uns par rapport aux autres en introduisant des éléments d'alignement qui sont au moins en partie complémentaires des ouvertures d'alignement, de sorte qu'ils peuvent présenter des anisotropies du coefficient de dilatation thermique en direction de l'axe d'épaisseur de la plaque.

2. Corps de base optique selon la revendication 1, **caractérisé en ce que** l'évidement comprend des structures de guidage de lumière, en particulier des pièges à lumière diffusée (64).

3. Corps de base optique selon la revendication 1 ou 2, **caractérisé en ce que** les éléments (12, 14, 16) plats présentent chacun une épaisseur comprise entre 1 mm à peu près et 15 mm à peu près.

4. Corps de base optique selon l'une quelconque des revendications 1 à 3, **caractérisé en ce que** des trajets de rayons et/ou des miroirs sont disposés dans le corps de base optique, dans lequel des logements destinés à insérer des détecteurs à canal unique de même construction à partir de côtés différents dans le corps de base optique sont prévus dans le corps de base optique de telle sorte que des rayons lumineux puissent rencontrer les sections de réception de lumière des détecteurs quel que soit le côté à partir duquel les détecteurs sont insérés dans le corps de base optique.

5. Spectromètre comprenant un corps de base optique selon l'une quelconque des revendications 1 à 3, sur lequel sont supportés les composants du spectromètre.

6. Spectromètre selon la revendication 5, comprenant un corps de base optique selon la revendication 4.

7. Spectromètre selon la revendication 6, comprenant des détecteurs à canal unique, dans lequel chaque détecteur à canal unique présente une section de réception de lumière, **caractérisé en ce qu'**au moins certains logements adjacents dans le corps de base optique sont formés telle sorte que les sections de réception de lumière de détecteurs adjacents insérés dans ceux-ci sont plus proches les uns des autres à l'état de montage prévu que cela ne serait possible si les mêmes détecteurs étaient disposés parallèlement les uns à côté des autres.

8. Spectromètre selon l'une quelconque des revendications 6 ou 7, **caractérisé en ce que** les logements sont conçus de telle sorte que les détecteurs puissent être insérés dans le corps de base optique à partir de deux à quatre côtés décalés les uns des autres de 90° respectivement.

9. Spectromètre selon l'une quelconque des revendications 6 à 7, **caractérisé en ce que** les logements destinés à être équipés de détecteurs à canal unique et les trajets de rayons sont formés par des évidements formés dans des éléments plats superposés, au moyen d'un procédé de séparation.

10. Procédé de fabrication d'un corps de base optique pour spectromètre, destiné à supporter des composants d'un spectromètre, comprenant les étapes suivantes consistant à:
- fournir une ou plusieurs plaque/plaques en matière plastique renforcée de fibres de carbone (PRFC) ou en matière plastique renforcée de fibres de verre (PRFV) d'un seul type,
- fabriquer des éléments plats à partir de la plaque/des plaques au moyen d'un procédé de séparation tout en maintenant le plan d'isotropie de la plaque/des plaques dans les éléments plats, dans lequel un évidement est ménagé dans au moins un des éléments (14) plats au moyen d'un procédé de séparation, qui est recouvert au moyen de deux autres éléments (12, 16) plats pour former une cavité entre les éléments plats, dans lequel des évidements sont ménagés dans plusieurs éléments plats au moyen d'un procédé de séparation de telle sorte que, lorsque les éléments plats sont superposés et reliés entre eux, au moins certains évidements dans des éléments plats adjacents se complètent pour former des trajets de rayons et pour supporter d'autres composants de spectromètres, et des ouvertures d'alignement (52) correspondant les unes aux autres sont réalisées dans des éléments plats à superposer de manière adjacente, avant de relier entre eux les éléments plats, de telle sorte que les éléments plats peuvent être alignés les uns par rapport aux autres en introduisant des éléments d'alignement qui sont au moins en partie complémentaires des ouvertures d'alignement,
- construire le corps de base optique en superposant les éléments plats les uns sur les autres à l'aide des éléments d'alignement et en reliant, en particulier en collant ceux-ci les uns aux autres de manière à ce que leurs tracés de fibres coïncident les uns avec les autres de sorte qu'ils peuvent présenter des anisotropies du coefficient de dilatation thermique en direction de l'axe d'épaisseur de la plaque.
